(19) **Europäisches Patentamt / European Patent Office / Office européen des brevets**

(11) **EP 2 807 110 B1**

(12) # EUROPÄISCHE PATENTSCHRIFT

(45) Veröffentlichungstag und Bekanntmachung des Hinweises auf die Patenterteilung:
**11.03.2020   Patentblatt 2020/11**

(21) Anmeldenummer: **13700212.7**

(22) Anmeldetag: **09.01.2013**

(51) Int Cl.:
**B67D 7/78** (2010.01)       **B67D 7/16** (2010.01)
**B67D 1/08** (2006.01)       **G01F 23/70** (2006.01)

(86) Internationale Anmeldenummer:
**PCT/EP2013/050269**

(87) Internationale Veröffentlichungsnummer:
**WO 2013/110500 (01.08.2013 Gazette 2013/31)**

(54) **TANKAUSLASS-ANSCHLUSSVORRICHTUNG FÜR GETRÄNKEZUBEREITUNGSVORRICHTUNG**

TANK OUTLET CONNECTION DEVICE FOR BEVERAGE PREPARATION DEVICE

DISPOSITIF DE RACCORDEMENT D'UNE ÉVACUATION DE RÉSERVOIR CONÇU POUR UN DISPOSITIF DE PRÉPARATION DE BOISSON

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.01.2012   DE 102012200949**

(43) Veröffentlichungstag der Anmeldung:
**03.12.2014   Patentblatt 2014/49**

(73) Patentinhaber: **BSH Hausgeräte GmbH**
**81739 München (DE)**

(72) Erfinder:
• **BECK, Rudolf**
**84518 Garching a. d. Alz (DE)**
• **HOECK, Florian**
**83313 Siegsdorf (DE)**
• **STROBL, Robert**
**83370 Seeon (DE)**

(56) Entgegenhaltungen:
WO-A2-02/27276       US-A- 6 131 769
US-A1- 2001 048 958       US-A1- 2005 016 267
US-A1- 2007 261 477       US-A1- 2010 005 903

EP 2 807 110 B1

**Beschreibung**

Die vorliegende Erfindung betrifft eine Tankauslass-Anschlussvorrichtung zum Anschluss an einen Tankauslass eines Flüssigkeitstanks einer Getränkezubereitungsvorrichtung. Die Tankauslass-Anschlussvorrichtung weist dabei einen, durch die Tankauslass-Anschlussvorrichtung hindurchführenden Strömungspfad auf.

Getränkezubereitungsvorrichtungen weisen häufig einen Flüssigkeitstank, insbesondere einen Wassertank, auf, dem durch die Getränkezubereitungsvorrichtung für die Zubereitung eines Getränks Flüssigkeit, insbesondere Wasser, entnommen wird. Der Flüssigkeitstank ist in der Regel als abnehmbares bzw. einfach demontierbares Bauteil ausgebildet, um so für einen Benutzer ein einfaches und schnelles Befüllen desselben zu ermöglichen. Für die Zubereitung von Getränken sind in der Regel im Bereich des Flüssigkeitstanks mehrere, betriebsrelevante Parameter zu erfassen. Insbesondere wird in der Regel bei Getränkezubereitungsvorrichtungen durch einen Füllstandssensor der Füllstand innerhalb des Flüssigkeitstanks daraufhin überwacht, ob dieser auf einem ausreichend hohen Niveau liegt, um bei Durchführen einer Getränkezubereitung einem Ansaugen von Luft vorzubeugen. Gegebenenfalls kann einem Benutzer signalisiert werden, wenn der Füllstand nicht mehr ausreichend ist. Weiterhin wird in der Regel eine, während der Zubereitung eines Getränks aus dem Flüssigkeitstank entnommene Flüssigkeitsmenge und/oder der Durchfluss durch eine entsprechende Entnahmeleitung gemessen, um so eine korrekte Zubereitung des jeweiligen Getränks sicherzustellen. Darüber hinaus bestehen noch weitere, betriebsrelevante Parameter in dem Bereich des Flüssigkeitstanks, die je nach Ausbildung der Getränkezubereitungsvorrichtung zu erfassen sind. Dies sind beispielsweise die Erfassung der Temperatur der in dem Flüssigkeitstank befindlichen Flüssigkeit durch einen Temperatursensor, was insbesondere bei Heißgetränkezubereitungsvorrichtungen relevant ist, und/oder die Detektion durch einen Tankerkennungssensor, ob der Flüssigkeitstank innerhalb der Getränkezubereitungsvorrichtung montiert ist oder nicht.

Die US006131769A offenbart eine Vorrichtung, die sich zum Feststellen eines niedrigen Flüssigkeitspegels in einem Behälter mit Bodenentleerung eignet. Zu diesem Zweck kann die Vorrichtung einen sich vom Behälter nach außen erstreckenden Tankauslass mit einer mittigen Bohrung, durch die Flüssigkeit von einem Behälterboden abfließen kann, mindestens ein im Tankauslass vorgesehenes Führungselement, mindestens einen Schwimmer, der in den Tankauslass integriert ist, an dem Führungselement entlang bewegbar angeordnet ist und in einer aus dem Behälter abzulassenden Flüssigkeit schwimmt, außerhalb des Tankauslasses angeordnete Mittel, die einen Lichtstrahl entlang einer vom Schwimmer unterbrochenen Bahn in den Tankauslass leiten, wenn eine Flüssigkeit bis zu einem vorbestimmten Pegel innerhalb des Tankauslasses abfließt, und außerhalb des Tankauslasses angeordnete Mittel, die feststellen, wann der Schwimmer den Lichtstrahl schneidet, umfassen.

Die WO 02/27276 A2 offenbart einen Strömungsmesser zur Bestimmung der Strömungsgeschwindigkeit einer Flüssigkeit in einer Flüssigkeitsleitung, wobei der Strömungsmesser einen Durchflusssensor, einen Temperatursensor und einem Mikrocontroller an der Flüssigkeitsleitung aufweist.

Die US 2010/005903 A1 offenbart einen Getränkespender mit einem Anemometer als Meßsonde.

Innerhalb von Getränkezubereitungsvorrichtungen ist der verfügbare Raum in der Regel begrenzt. Dementsprechend besteht zum Einen die Anforderung an die, im Bereich des Flüssigkeitstanks vorzusehenden Sensoren, dass diese und deren zugehörige Verkabelung platzsparend unterbringbar sind. Weiterhin soll die Anbringung der Sensoren derart erfolgen, dass bei der Entnahme sowie bei dem Einbau des Flüssigkeitstanks das Risiko einer Beschädigung des betreffenden Sensors und/oder von dessen Verkabelung minimiert ist. Zusätzlich ist im Hinblick auf ein robustes Einsatzverhalten und eine kostengünstige Herstellung der Getränkezubereitungsvorrichtung ein einfacher Aufbau erstrebenswert. Im Hinblick auf diese Anforderungen besteht bei den bisher, im Bereich des Flüssigkeitstanks an verschiedenen Stellen vorgesehenen Sensoren noch ein Verbesserungsbedarf.

Dementsprechend besteht die Aufgabe der vorliegenden Erfindung darin, für Getränkezubereitungsvorrichtungen eine einfach und schnell assemblierbare sowie im Einsatzverhalten robuste Anordnung bereitzustellen, durch die zumindest ein Teil der betriebsrelevanten Parameter, die im Bereich des Flüssigkeitstanks zu bestimmen sind, erfassbar ist.

Die Aufgabe wird durch eine Tankauslass-Anschlussvorrichtung gemäß Anspruch 1 gelöst. Vorteilhafte Weiterbildungen sind in den Unteransprüchen angegeben.

Gemäß der vorliegenden Erfindung wird eine Tankauslass-Anschlussvorrichtung bereitgestellt, die derart ausgebildet ist, dass sie an einen Tankauslass eines Flüssigkeitstanks einer Getränkezubereitungsvorrichtung anschließbar ist. Die Tankauslass-Anschlussvorrichtung weist einen, durch die Tankauslass-Anschlussvorrichtung hindurchführenden Strömungspfad und eine, in die Tankauslass-Anschlussvorrichtung integrierte Sensoranordnung auf. Die Sensoranordnung weist zumindest einen Füllstandssensor, einen Durchflusssensor und einen Temperatursensor auf und ist derart ausgebildet, dass durch diese ein Füllstand innerhalb eines, an der Tankauslass-Anschlussvorrichtung angeschlossenen Flüssigkeitstanks sowie ein Durchfluss von Flüssigkeit durch die Tankauslass-Anschlussvorrichtung messbar ist. Durch den Temperatursensor ist die Temperatur einer, in dem Strömungspfad und/oder in einem, an der Tankauslass-Anschlussvorrichtung angeschlossenen Flüssigkeitstank befindlichen Flüssigkeit messbar.

Indem gemäß der vorliegenden Erfindung der Füllstandssensor, der Durchflusssensor und der Temperatursensor in die Tankauslass-Anschlussvorrichtung integriert sind, sind sie (bei montiertem Flüssigkeitstank) in unmittelbarer Nähe des Flüssigkeitstanks vorgesehen. Das Risiko einer Beschädigung der Sensoranordnung bei Entnahme und/oder Einbau des

Flüssigkeitstanks ist gering, da sie an einer geschützten Position untergebracht sind. Insbesondere ist die Anordnung in der Regel derart, dass der Tankauslass bodenseitig oder im unteren Bereich des Flüssigkeitstanks vorgesehen ist und der Flüssigkeitstank zumindest auch nach oben aus der Getränkezubereitungsvorrichtung entnommen wird. Ferner ermöglicht die vorliegende Erfindung, dass die Assemblierung der Komponenten der Getränkezubereitungsvorrichtung im Bereich des Flüssigkeitstanks schnell und unproblematisch durchführbar ist. Insbesondere ist der Aufwand für die Verkabelung der für die Füllstandsmessung und Durchflussmessung erforderlichen Sensoren reduziert, da sie zumindest bezüglich dieser Sensoren direkt an der Tankauslass-Anschlussvorrichtung erfolgen kann. Auch im Service-Fall wird die Durchführung der Reparatur erleichtert.

Allgemein sind in Getränkezubereitungsvorrichtungen zum Verbinden des Flüssigkeitstanks mit einer, in der Getränkezubereitungsvorrichtung zum Anschluss an den Flüssigkeitstank vorgesehenen Leitung (Entnahmeleitung) sowohl an einem Auslass des Flüssigkeitstanks als auch an der Leitung entsprechende Anschlusselemente vorgesehen. Vorliegend wird das an dem Flüssigkeitstank vorgesehene Anschlusselement als Auslassbauteil bezeichnet. Das an der entsprechenden Leitung vorgesehene Anschlusselement, das zum Verbinden mit dem Auslassbauteil des Flüssigkeitstanks ausgebildet ist, wird vorliegend als Tankauslass-Anschlussvorrichtung bezeichnet. Die Tankauslass-Anschlussvorrichtung (und entsprechend auch das Auslassbauteil) sind dabei vorzugsweise derart ausgebildet, dass der durch die Tankauslass-Anschlussvorrichtung hindurchführende Strömungspfad in einem angeschlossenen Zustand in Fluidverbindung mit dem Tankinhalt des Flüssigkeitstanks steht. Der Flüssigkeitstank selbst ist insbesondere als entnehmbares Bauteil ausgebildet. Um eine schnelle und einfache Entnahme des Flüssigkeitstanks aus der Getränkezubereitungsvorrichtung und auch einen entsprechend schnellen und einfachen Einbau desselben zu ermöglichen, sind das Auslassbauteil und die Tankauslass-Anschlussvorrichtung vorzugsweise derart ausgebildet, dass sie ein schnelles und einfaches Ankoppeln aneinander und Entkoppeln voneinander ermöglichen. Insbesondere sind sie derart ausgebildet, dass das Ankoppeln einfach durch Einführen der Tankauslass-Anschlussvorrichtung in das Auslassbauteil oder umgekehrt erfolgt. Die Tankauslass-Anschlussvorrichtung weist in diesem Fall insbesondere einen Anschlussstutzen auf. Das Auslassbauteil weist insbesondere ein Ventil auf, das durch Ankoppeln der Tankauslass-Anschlussvorrichtung geöffnet wird, und das selbsttätig bei Herausziehen bzw. Abkoppeln der Tankauslass-Anschlussvorrichtung schließt.

Die Tankauslass-Anschlussvorrichtung bildet insbesondere eine Komponente für eine Heißgetränkezubereitungsvorrichtung zur Zubereitung von Heißgetränken, wie beispielsweise Kaffe, Kakao, Tee, Suppe, etc.. Insbesondere wird die Heißgetränkezubereitungsvorrichtung durch einen Kaffeevollautomaten, eine Kapselmaschine (zur Zubereitung von Getränken mittels entsprechender Kapseln) oder einen Teebereiter gebildet.

Der Flüssigkeitstank kann zur Aufnahme jeglicher, zur Zubereitung eines Getränks verwendbaren Flüssigkeit, wie beispielsweise von Wasser, Milch, Sirup, Saft, etc., dienen. Bevorzugt handelt es sich um einen Wassertank. Der durch die Tankauslass-Anschlussvorrichtung hindurchführende Strömungspfad wird insbesondere durch einen geschlossenen, von einer Einlassöffnung zu einer Auslassöffnung führenden Strömungskanal gebildet. Grundsätzlich besteht bei den, in dem vorliegenden Zusammenhang erläuterten Sensoren jeweils die Möglichkeit, dass zwei oder mehrere Sensoren ineinander integriert sind, so dass je nach Betriebszustand und/oder Ansteuerung durch ein- und desselben Sensor unterschiedliche Parameter erfassbar sind.

Der Füllstandssensor ist derart ausgebildet, dass durch diesen (je nach angewendetem Messverfahren) eine, für den Füllstand charakteristische Messgröße erfassbar ist, aus der dann der Füllstand direkt oder eine in den Füllstand umrechenbare Größe (z.B. die Füllmenge, etc.) durch eine Sensorelektronik oder durch eine übergeordnete Geräteelektronik ermittelt wird. Beispielsweise kann solch ein Füllstandssensor mittels Ultraschallmessung, mittels Druckmessung oder kapazitiv den Füllstand oder eine in den Füllstand umrechenbare Größe ermitteln. Entsprechend ist der Durchflusssensor derart ausgebildet, dass durch diesen (je nach angewendetem Messverfahren) eine, für den Durchfluss charakteristische Messgröße erfassbar ist, aus der dann der Volumendurchfluss direkt oder eine in den Volumendurchfluss umrechenbare Größe (z.B. das während einer Zubereitungsphase entnommene Gesamtvolumen, der Massedurchfluss, die Strömungsgeschwindigkeit, etc.) durch eine Sensorelektronik oder durch eine übergeordnete Geräteelektronik ermittelt wird. Beispiele für Durchflusssensoren sind insbesondere ein Flügelradzähler, ein Sensor mit integrierter Turbine, deren Drehzahl beispielsweise mittels eines, an einem Stator vorgesehenen Hallelements erfassbar ist, ein thermischer Anemometriesensor, ein Sensor, durch den ein Ultraschallmessverfahren durchführbar und Frequenzverschiebungen von eingekoppelten Signalen auswertbar sind, ein Sensor, durch den Druckdifferenzmessungen an einer Engstelle durchführbar sind, etc..

Die vorliegende Erfindung betrifft ferner auch ein Tankauslass-Anschlusssystem, welches ein, an einem Tankauslass anbringbares Auslassbauteil und eine, an das Auslassbauteil anschließbare Tankauslass-Anschlussvorrichtung aufweist. Das Auslassbauteil weist insbesondere ein Ventil auf, das durch Einführen eines Abschnittes der Tankauslass-Anschlussvorrichtung geöffnet wird und das selbsttätig beim Entkoppeln der Tankauslass-Anschlussvorrichtung von dem Auslassbauteil schließt.

Erfindungsgemäß weist die Sensoranordnung einen Temperatursensor auf, durch den die Temperatur einer, in dem Strömungspfad befindlichen Flüssigkeit messbar ist. Dies ist insbesondere im Hinblick auf eine einfache und raumsparende Bauweise des Temperatursensors vorteilhaft. Ferner ist in der Regel der Anschluss der Tankauslass-Anschlussvorrichtung an den Flüssigkeitstank derart ausgebildet, dass der Strömungspfad der Tankauslass-Anschlussvorrichtung in Fluidverbindung mit dem Tankinhalt steht. Dementsprechend entspricht die Temperatur der in dem Strömungspfad befindlichen Flüssigkeit im Wesentlichen der Temperatur der in dem Flüssigkeitstank befindlichen Flüssigkeit. Alternativ kann der Temperatursensor der Sensoranordnung auch derart ausgebildet sein, dass durch diesen die Temperatur einer, in einem an der Tankauslass-Anschlussvorrichtung angeschlossenen Flüssigkeitstank befindlichen Flüssigkeit erfassbar ist. Ein Temperatursensor ist insbesondere bei Heißgetränkezubereitungsvorrichtungen erforderlich, um den für eine Getränkezubereitung erforderlichen Temperaturhub einer zur Zubereitung eines Getränkes entnommenen Flüssigkeitsmenge zu bestimmen. Die Erwärmung der entnommenen Flüssigkeitsmenge erfolgt in der Regel stromabwärts des Flüssigkeitstanks und der Tankauslass-Anschlussvorrichtung. Insbesondere ist für die Erwärmung der entnommenen Flüssigkeitsmenge ein stromabwärts des Flüssigkeitstanks angeordneter Durchlauferhitzer vorgesehen. Dieser ist insbesondere im Hinblick auf die Energieeffizienz als auch im Hinblick auf eine korrekte und reproduzierbare Getränkezubereitung vorteilhaft. Für solch einen Durchlauferhitzer ist eine Temperaturmessung der zugeführten Flüssigkeit besonders vorteilhaft, da dessen Heizleistung dann entsprechend des erforderlichen Temperaturhubs einstellbar ist. Alternativ zu einem Durchlauferhitzer kann stromabwärts des Flüssigkeitstanks auch ein Boiler vorgesehen sein, durch den ein Flüssigkeitsvolumen auf einer vorbestimmten Temperatur gehalten wird. Ferner kann als weitere Alternative auch ein Thermoblock stromabwärts des Flüssigkeitstanks zur Erwärmung einer, während der Getränkezubereitung aus dem Flüssigkeitstank entnommenen Flüssigkeit vorgesehen sein. Bei einem Thermoblock handelt es sich um ein, von der entnommenen Flüssigkeit durchströmbares Bauteil mit relativ hoher Wärmekapazität, das im Einsatz vor der Getränkezubereitung vorgeheizt wird und von dem während der Getränkezubereitung Wärme auf eine, den Thermoblock durchströmende Flüssigkeit, die zuvor dem Flüssigkeitstank entnommen wurde, übertragen wird.

Allgemein ist bei dem Füllstandssensor, dem Durchflusssensor und - sofern vorgesehen - bei dem Temperatursensor und/oder weiteren, in die Tankauslass-Anschlussvorrichtung integrierten Sensoren vorteilhaft, wenn diese sensorisch an den Strömungspfad der Tankauslass-Anschlussvorrichtung angekoppelt sind.

Gemäß einer Weiterbildung weist die Sensoranordnung einen Tankerkennungssensor auf, durch den erkennbar ist, ob die Tankauslass-Anschlussvorrichtung an einem Flüssigkeitstank angeschlossen ist. Diese Weiterbildung ermöglicht, dass eine entsprechende Information an die Geräteelektronik gebbar ist und die Getränkezubereitung entsprechend steuerbar ist, um zu verhindern, dass die Vorgänge für eine Getränkezubereitung ablaufen, ohne dass der Flüssigkeitstank angeschlossen ist. Der Tankerkennungssensor kann dabei insbesondere auf einem mechanischen Erkennungsprinzip basieren, wie beispielsweise durch entsprechende mechanische Schalter, etc., oder auf einem magnetischen Erkennungsprinzip, wie es beispielsweise durch einen Hallsensor oder durch einen Reedschalter realisiert wird. Alternativ oder zusätzlich kann die Sensoranordnung auch noch weitere Sensoren aufweisen. Insbesondere können auch noch Erkennungssensoren für weitere Bauteile, wie beispielsweise für eine Brühkammertür, eine Topfschale, etc., vorgesehen sein.

Im Hinblick auf eine einfache Verkabelung ist es erfindungsgemäßvorgesehen, dass die Sensoren der Sensoranordnung eine gemeinsame Sensorelektronik und gemeinsame Versorgungs- und Kommunikationsanschlüsse aufweisen. Erfindungsgemäß weisen sämtliche, in die Tankauslass-Anschlussvorrichtung integrierte Sensoren der Sensoranordnung eine gemeinsame Sensorelektronik und gemeinsame Versorgungs- und Kommunikationsanschlüsse auf. Dementsprechend müssen bei der Assemblierung nur wenige Kabel zentral an einen Anschlusspunkt hingeführt und an diesem angeschlossen werden. Eine derartige Kabelführung ist im Hinblick auf eine schnelle Assemblierung, auf eine raumsparende Unterbringung sowie im Hinblick auf die Vermeidung einer Beschädigung der Kabel vorteilhaft. Je nach Ausbildung und Messprinzip der jeweiligen Sensoren können die betreffenden Sensoren neben der gemeinsamen Sensorelektronik auch noch zusätzliche Elektronikkomponenten, die getrennt von der gemeinsamen Sensorelektronik ausgebildet sind, aufweisen. Die gemeinsame Sensorelektronik ist insbesondere in Form einer gemeinsamen Platine ausgebildet. Vorzugsweise weisen die gemeinsamen Versorgungs- und Kommunikationsanschlüsse genau einen Kommunikationsanschluss für eine Buskommunikation (z.B. gemäß einem herstellerspezifischen Protokoll, CAN-Bus, etc.) und zwei Versorgungsanschlüsse zur Stromversorgung (einer für die Versorgungsspannung und einer für die Masse) auf. Die Buskommunikation über den Kommunikationsanschluss dient dabei insbesondere dazu, die von den betreffenden Sensoren erfassten Daten, die gegebenenfalls durch die Sensorelektronik auch weiterverarbeitet werden können, an eine übergeordnete Geräteelektronik zu übermitteln. Ferner können über diese Buskommunikation die einzelnen Sensoren von einer übergeordneten Geräteelektronik angesteuert werden. Insbesondere können sie in Abhängigkeit von dem jeweiligen Betriebszustand angesteuert werden, um eine entsprechende, sensorische Erfassung durchzuführen.

Gemäß einer Weiterbildung wird der Durchflusssensor durch einen thermischen Anemometriesensor gebildet. Dies ermöglicht eine raumsparende Unterbringung desselben. Ferner sind keine beweglichen Bauteile erforderlich, was insbesondere im Hinblick auf die Reparaturanfälligkeit vorteilhaft ist. Als thermischer Anemometriesensor wird ein Sensor bezeichnet, der ein elektrisch beheizbares Widerstandsheizelement, wie beispielsweise ein NTC-Element (NTC: negative temperature coefficient; deutsch: negativer Temperaturkoeffizient), ein PTC-Element (PTC: positive temperature coefficient; deutsch: positiver Temperaturkoeffizient), oder ein anderweitiges Widerstandsheizelement (z.B. mit im Wesentlichen konstantem Widerstand über der Temperatur) aufweist, das für die Durchführung einer Durchflussmessung mit elektrischem Strom beaufschlagt und damit beheizt wird. Durch die Umströmung desselben mit Flüssigkeit findet ein Wärmeübertrag in die strömende Flüssigkeit statt. Dieser Wärmeübertrag steht in einer direkten Verbindung mit der Strömungsgeschwindigkeit bzw. dem Durchfluss der Flüssigkeit. In der Regel ist bei einem thermischen Anemometriesensor eine vorhergehende Kalibrierung erforderlich, die insbesondere in dem assemblierten Zustand, d.h. nach Einbau in die Getränkezubereitungsvorrichtung, erfolgen kann.

Gemäß einer Weiterbildung weist der thermische Anemometriesensor ein NTC-Widerstandsheizelement oder ein PTC-Widerstandsheizelement auf. Dies ermöglicht ein relativ einfach ausgestaltetes Messverfahren, da durch Ermitteln von dessen elektrischem Widerstand direkt die Strömungsgeschwindigkeit bzw. der Durchfluss bestimmbar ist (nach einer vorangehenden Kalibrierung). Bei einem PTC-Widerstandsheizelement ist ferner die Eigenschaft, dass sich dessen Widerstand mit ansteigender Temperatur erhöht, im Hinblick auf die Vermeidung einer Überhitzung desselben vorteilhaft. Grundsätzlich kann, wie in dem Fachgebiet bekannt ist, neben einem NTC- oder einem PTC-Widerstandsheizelement auch ein anderweitiges Widerstandsheizelement verwendet werden. Hier gestaltet sich das Messverfahren dann etwas aufwändiger.

Gemäß einer Weiterbildung ist der thermische Anemometriesensor zur Durchführung einer Durchflussmessung derart betreibbar, dass ein konstanter Stromfluss über dessen Widerstandsheizelement eingestellt wird. Diese Weiterbildung ist insbesondere dann vorteilhaft, wenn dessen Widerstandsheizelement durch ein NTC- oder ein PTC-Widerstandsheizelement gebildet wird, da dann aus dem Spannungsabfall über dem Widerstandsheizelement direkt der Durchfluss ermittelt werden kann. Alternativ sind aber auch andere Ausgestaltungen des Messverfahrens möglich, wie beispielsweise die Einstellung eines konstanten Spannungsabfalls über dem Widerstandsheizelement, etc..

Gemäß einer Weiterbildung ist der thermische Anemometriesensor derart betreibbar, dass durch diesen eine Temperaturmessung einer, in dem Strömungspfad (der Tankauslass-Anschlussvorrichtung) befindlichen Flüssigkeit durchführbar ist. Auf diese Weise können Bauteile eingespart werden. Eine derartige Temperaturmessung durch den thermischen Anemometriesensor ist insbesondere in Betriebszuständen durchführbar, in denen der Strömungspfad (der Tankauslass-Anschlussvorrichtung) mit stehender Flüssigkeit gefüllt ist. Dementsprechend wird solch eine Temperaturmessung insbesondere dann durchgeführt, wenn dem Flüssigkeitstank gerade keine Flüssigkeit entnommen wird. Dies ist insbesondere dann der Fall, wenn gerade keine Getränkezubereitung erfolgt. Eine entsprechende Ansteuerung des thermischen Anemometriesensors kann durch eine übergeordnete Geräteelektronik erfolgen. Bei dieser Weiterbildung ist besonders vorteilhaft, wenn der thermische Anemometriesensor ein NTC- oder ein PTC-Widerstandsheizelement aufweist.

Gemäß einer Weiterbildung wird der Füllstandssensor durch einen Drucksensor gebildet. Auf diese Weise kann in Betriebszuständen, in denen keine Flüssigkeitsentnahme aus dem Flüssigkeitstank erfolgt, der Druck gemessen und daraus dann der Füllstand innerhalb des Flüssigkeitstanks bestimmt werden. Auch hier kann wieder eine entsprechende Ansteuerung des Drucksensors durch eine übergeordnete Geräteelektronik erfolgen. Wie in dem Fachgebiet bekannt ist, bestehen unterschiedliche Möglichkeiten der Ausbildung eines Drucksensors. Beispielsweise kann er zur Druckerfassung eine Membran, ein Piezoelement, etc., aufweisen. Die Verwendung einer elastischen Membran hat sich dabei besonders gut bewährt.

Die vorliegende Erfindung betrifft ferner eine Getränkezubereitungsvorrichtung mit mindestens einer erfindungsgemäßen Tankauslass-Anschlussvorrichtung zum Anschluss eines Flüssigkeitstanks an derselben, wobei die Tankauslass-Anschlussvorrichtung auch gemäß einer oder mehrerer der oberhalb erläuterten Varianten ausgebildet sein kann. Der Flüssigkeitstank ist dabei insbesondere als abnehmbares Bauteil innerhalb der Getränkezubereitungsvorrichtung ausgebildet, so dass er zum Auffüllen aus dem Gerät herausnehmbar ist. Bei der Getränkezubereitungsvorrichtung handelt es sich insbesondere um eine Heißgetränkezubereitungsvorrichtung. Der Flüssigkeitstank bildet insbesondere einen Wassertank.

Gemäß einer Weiterbildung weist die Getränkezubereitungsvorrichtung eine, mit der Sensoranordnung in Kommunikationsverbindung stehende Geräteelektronik auf. Durch die Geräteelektronik wird insbesondere die Zubereitung der Getränke gesteuert. Ferner ist die Geräteelektronik insbesondere zum Empfangen von Sensorsignalen von der Sensoranordnung und zum Senden von Steuersignalen an die Sensoranordnung ausgebildet. Gemäß einer Weiterbildung ist die Geräteelektronik derart ausgebildet, dass durch diese die Sensoranordnung in Abhängigkeit von dem jeweiligen Betriebszustand ansteuerbar ist. Gemäß einer Weiterbildung ist die Geräteelektronik derart ausgebildet, dass durch diese die Sensoranordnung in Abhängigkeit davon angesteuert wird, ob die Tankauslass-Anschlussvorrichtung an einem Flüssigkeitstank angeschlossen ist oder nicht, und/oder in Abhängigkeit davon, ob eine Flüssigkeitsentnahme aus dem Flüssigkeitstank erfolgt oder nicht. Gemäß einer Weiterbildung ist die Geräteelektronik derart ausgebildet, dass durch diese die Sensoranordnung nur zu Zeiten, in denen keine Flüssigkeitsentnahme aus dem Flüssigkeitstank erfolgt, zur Durchführung einer Füllstandsmessung und/oder einer Temperaturmessung ansteuerbar ist. Auf diese Weise wird sichergestellt, dass die Erfassung des Füllstands und/oder der Temperatur nicht durch eine, im Falle einer Flüssigkeitsentnahme auftretende Strömung beeinflusst wird. Dies ist insbesondere dann vorteilhaft, wenn der Füllstandssensor durch einen Drucksensor gebildet wird und/oder wenn der Temperatursensor durch einen thermischen Anemometriesensor gebildet wird. Gemäß einer Weiterbildung ist die Geräteelektronik derart ausgebildet, dass durch diese die Sensoranordnung zu den Zeiten, in denen eine Flüssigkeitsentnahme aus dem Flüssigkeitstank erfolgt, zur Durchführung einer Durchflussmessung ansteuerbar ist. Dementsprechend kann insbesondere ein thermischer Anemometriesensor während der Flüssigkeitsentnahme zur Durchflussmessung und während der Zeiten, zu denen keine Flüssigkeitsentnahme erfolgt, zur Temperaturmessung eingesetzt werden. Vorzugsweise wird zumindest dann, wenn eine Getränkezubereitung durchgeführt wird oder zur Durchführung ansteht, überprüft, ob der zugehörige Flüssigkeitstank an der Tankauslass-Anschlussvorrichtung angeschlossen ist. Dadurch kann insbesondere verhindert werden, dass anstatt Flüssigkeit Luft zur Getränkezubereitung angesaugt wird. Hierfür kann ein separater Tankerkennungssensor vorgesehen sein. Diese Überwachung kann aber auch durch den thermischen Anemometriesensor durchgeführt werden. Denn wird dessen Widerstandsheizelement mit Strom beaufschlagt und ist dieses nicht von strömender Flüssigkeit umgeben (sondern beispielsweise von Luft), so erwärmt es sich schneller und stärker als in dem Fall, in dem es von strömender Flüssigkeit umgeben ist. Dementsprechend kann ein solch schnelles Erwärmen (z.B. durch Auswerten des Gradienten des Temperaturanstiegs) oder ein übermäßiges Erwärmen (z.B. bei Überschreiten eines vorbestimmten Temperatur-Grenzwerts) als Fehlen des Flüssigkeitstanks detektiert werden. Insbesondere wird gemäß einer Weiterbildung der Durchflusssensor durch einen thermischen Anemometriesensor gebildet und die Geräteelektronik und die Sensoranordnung sind derart ausgebildet, dass der Fall, in dem ein Widerstandsheizelement des thermischen Anemometriesensors über einen vorbestimmten Grenzwert erwärmt wird, als Fehlen des Flüssigkeitstanks detektierbar ist.

Weitere Vorteile und Weiterbildungen ergeben sich aus der nachfolgenden Beschreibung von Ausführungsbeispielen unter Bezugnahme auf die beigefügten Zeichnungen.

Fig. 1     ist eine schematische Querschnittansicht einer Tankauslass-Anschlussvorrichtung gemäß einer spezifischen Ausführungsform der vorliegenden Erfindung;

Fig. 2     ist ein Schaltbild zur Realisierung einer Durchflussmessung und einer Temperaturmessung mit einem thermischen Anemometriesensor; und

Fig. 3     ist eine schematische, teils aufgebrochene, perspektivische Ansicht einer Tankauslass-Anschlussvorrichtung gemäß einer zweiten Ausführungsform der vorliegenden Erfindung.

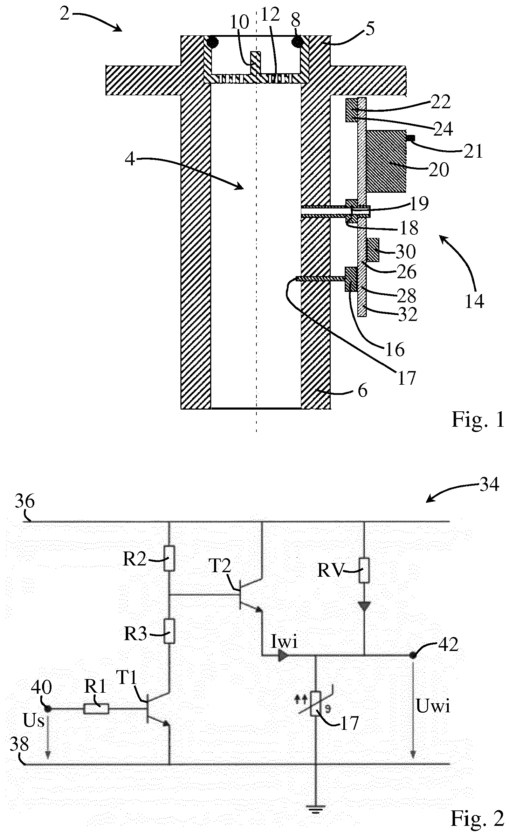

In Fig. 1 ist eine Tankauslass-Anschlussvorrichtung 2 gemäß einer spezifischen Ausführungsform der vorliegenden Erfindung mit thermischem Anemometriesensor 16 in Querschnittansicht dargestellt. Die Tankauslass-Anschlussvorrichtung 2 ist in Form eines Anschlussstutzens ausgebildet, durch den ein Strömungspfad 4 hindurchführt. Ein stirnseitiges Endstück 5 der Tankauslass-Anschlussvorrichtung 2 ist an ein entsprechendes, in einer Tankauslassöffnung vorzusehendes Auslassbauteil (nicht dargestellt) ankoppelbar, wie nachfolgend noch im Detail erläutert wird. Ein rückseitiges Endstück 6 der Tankauslass-Anschlussvorrichtung 2 ist an eine entsprechende Flüssigkeitsleitung anschließbar.

An dem stirnseitigen Endstück 4 ist innenseitig ein Dichtungsring 8 vorgesehen. In einem angekoppelten Zustand wird ein entsprechendes Anschlussstück des Auslassbauteils innenseitig in das stirnseitige Endstück 5, das vorliegend rohrförmig ausgebildet ist, eingeführt, so dass der Dichtungsring zur Herstellung der Dichtungsfunktion zusammengedrückt wird. In dem stirnseitigen Endstück 5 ist zentral ein stirnseitig nach vorne ragender Vorsprung 10 vorgesehen. Beim Anschluss der Tankauslass-Anschlussvorrichtung 2 an dem Auslassbauteil wird ein Ventil des Auslassbauteils durch den Vorsprung 10 aufgedrückt. In einem angeschlossenen Zustand steht folglich der Strömungspfad 4 in Fluidverbindung mit dem Tankinhalt des angeschlossenen Flüssigkeitstanks. Umgekehrt wird beim Entkoppeln der Vorsprung 10 wieder aus dem Ventil des Auslassbauteils herausgezogen, so dass sich das Ventil des Auslassbauteils wieder selbsttätig schließt. Bei der dargestellten Ausführungsform ragt der Vorsprung 10 stirnseitig von einem, sich über den Strömungspfad 4 erstreckenden Sieb 12 hervor.

Die Tankauslass-Anschlussvorrichtung 2 weist ferner eine, in die Tankauslass-Anschlussvorrichtung 2 integrierte Sensoranordnung 14 auf. Die Sensoranordnung 14 weist den thermischen Anemometriesensor 16 auf, dessen Widerstandsheizelement 17 in den Strömungspfad 4 ragt. Ferner weist die Sensoranordnung einen Drucksensor 18 auf, der zur Füllstandsmessung innerhalb eines, an der Tankauslass-Anschlussvorrichtung 2 angeschlossenen Flüssigkeitstanks dient. Der Drucksensor 18 weist eine, von dem Strömungspfad 4 zurückversetzte und mit diesem in Fluidkommunikation stehende Membran 19 auf, die sich in Abhängigkeit von dem wirkenden Druck dehnt. Weiterhin weist die Sensoranordnung 14 einen Tankerkennungssensor 20 auf, der bei der dargestellten Ausführungsform einen mechanischen Schalter 21, der durch einen hierfür vorgesehenen Abschnitt des Flüssigkeitstanks umschaltbar ist, und eine entsprechende Elektronik, durch welche die Stellung des Schalters 21 erkennbar ist, aufweist. In Fig. 1 ist noch eine weitere Alternative eines Tankerkennungssensors 22 dargestellt, bei welchem die Tankerkennung magnetisch erfolgt. Insbesondere weist der alternative Tankerkennungssensor 22 einen Hall-Sensor 24 auf. An dem Flüssigkeitstank ist bei dieser Alternative ein entsprechender, magnetischer Abschnitt vorgesehen. Dementsprechend unterscheidet sich bei angeschlossenem Flüssigkeitstank die Induktivität des Hall-Sensors 24 von dessen Induktivität bei entnommenem Flüssigkeitstank. Sämtliche, in die Tankauslass-Anschlussvorrichtung 2 integrierte Sensoren 16, 18, 20, 22 weisen eine gemeinsame Sensorelektronik 26 auf, die vorliegend durch eine Platine 28 und einen Mikrokontroller 30 gebildet wird. Die Platine 28 erfüllt gleichzeitig eine Haltefunktion für die daran angeordneten Sensoren 16, 18, 20, 22.

Die Verarbeitung der Messsignale und die Ansteuerung und/oder Energieversorgung der einzelnen Sensorkomponenten der Sensoranordnung 14 erfolgen zentral von der Sensorelektronik 26 aus. Diese Ausgestaltung ist auch im Hinblick auf die Verkabelung und die Gestaltung der elektrischen Anschlüsse vorteilhaft, da eine gemeinsame Verkabelung und gemeinsame Anschlussstecker für sämtliche Sensoren der Sensoranordnung 14 vorsehbar sind. Hierzu weist die Sensoranordnung 14 integral in der Platine 28 ausgebildete Randkartenstecker 32 auf. Insbesondere sind zwei elektrische Anschlüsse vorgesehen, wobei an einem die Versorgungsspannung und an dem anderen die Masse zur Stromversorgung der Sensoren anschließbar sind. Weiterhin ist ein Anschluss für den Anschluss einer 1-Draht-Busleitung eines 1-Draht-Bussystems vorgesehen. Das 1-Draht-Bussystem dient dabei zur Übermittlung von Daten zwischen der Sensoranordnung 14 und einer übergeordneten Geräteelektronik der jeweiligen Getränkezubereitungsvorrichtung. Alternativ kann auch ein anderweitiges Bussystem, das gegebenenfalls zwei oder mehr Datenleitungen aufweisen kann, vorgesehen sein.

Fig. 1 ist lediglich eine schematische Darstellung einer spezifischenen Ausführungsform einer Tankauslass-Anschlussvorrichtung 2 zur Durchflussmessung und Temperaturmessung mit dem thermischen Anemometriesensor 16. Die Anordnung der einzelnen Komponenten kann auch abweichend hierzu sein. Ferner können auch noch weitere Komponenten vorgesehen sein. Gegebenenfalls kann auch ein Gehäuse vorgesehen sein, welches die Sensoranordnung 14 umgibt.
Nachfolgend wird der Einsatz der erfindungsgemäßen Tankauslass-Anschlussvorrichtung am Beispiel der in Fig. 1 gezeigten Tankauslass-Anschlussvorrichtung 2 in einer (nicht dargestellten) Getränkezubereitungsvorrichtung erläutert. Die Getränkezubereitungsvorrichtung wird vorliegend durch einen Kaffeeautomaten mit einem herausnehmbaren, mit Wasser befüllbaren (nicht dargestellten) Flüssigkeitstank gebildet. Die erfindungsgemäße Tankauslass-Anschlussvorrichtung 2 dient dabei zum Anschluss an den Flüssigkeitstank. Die Getränkezubereitungsvorrichtung weist ferner eine (nicht dargestellte) Geräteelektronik auf, durch welche die Zubereitung von Heißgetränken sowie weitere Abläufe der Getränkezubereitungsvorrichtung gesteuert und/oder überwacht werden. Über die Kommunikationsverbindung (vorliegend: Busverbindung) mit der übergeordneten Geräteelektronik werden insbesondere die von den Sensoren ermittelten Messdaten von der Sensoranordnung 14 an die Geräteelektronik übermittelt. Ferner steuert die Geräteelektronik die einzelnen Sensoren der Sensoranordnung 14 in Abhängigkeit von dem jeweiligen Betriebszustand der Getränkezubereitungsvorrichtung an.

Im Vergleich zu bisher üblicherweise eingesetzten Füllstandssensoren, die jeweils Schwimmer und entsprechende Reed-Kontakte oder Hall-Elemente aufwiesen, ermöglicht die Bestimmung des Füllstandes durch den Drucksensor 18 einen deutlich einfacheren Aufbau. Wird von Wasser als Medium ausgegangen, so ist der Druck dieser Wassersäule 980,7 Pascal (entspricht 9,807 mbar; mbar: Millibar) pro 100 mm (mm: Millimeter) Füllhöhe. Unter der Annahme, dass der Flüssigkeitstank in der Regel eine Höhe von 150 - 300 mm aufweist, wird der Drucksensor 18 vorzugsweise für einen Druckbereich von 0 bis 35 mbar ausgelegt, um den in Frage kommenden Füllstandsbereich abzudecken. Bei einem Drucksensor als Füllstandssensor ist allgemein zu berücksichtigen, dass während einer Flüssigkeitsentnahme aus dem Flüssigkeitstank, was insbesondere während einer Getränkezubereitung erfolgt, durch den Pumpbetrieb (zum Ansaugen der Flüssigkeit aus dem Flüssigkeitstank) Stoßwellen auftreten, welche die Druckmessung stören können. Dementsprechend ist die Geräteelektronik derart ausgebildet, dass sie den Drucksensor 18 nur zu den Zeiten (über die Sensorelektronik 26) zur Bestimmung der Füllhöhe ansteuert, in denen keine Flüssigkeitsentnahme aus dem Flüssigkeitstank erfolgt. Selbst während einer Flüssigkeitsentnahme kann der Füllstand innerhalb des Flüssigkeitstanks weiter bestimmt werden, indem von dem zuvor als Füllstand ermittelten Wert ausgegangen wird und die während der Flüssigkeitsentnahme bis zu dem fraglichen Zeitpunkt entnommene Flüssigkeitsmenge, die über den Durchflusssensor 16 ermittelt wird, hiervon abgezogen wird.
Der thermische Anemometriesensor 16 bildet - je nach Ansteuerung - einen Temperatursensor zur Bestimmung der Temperatur der Flüssigkeit innerhalb des Flüssigkeitstanks sowie einen Durchflusssensor zur Bestimmung des Durchflusses (Flüssigkeitsvolumen/Zeit) der durch die Tankauslass-Anschlussvorrichtung hindurchströmenden Flüssigkeit. Allgemein wird bei einem thermischen Anemometriesensor 16 zur Durchflussmessung der Effekt ausgenützt, dass bei einem Beheizen von dessen Widerstandsheizelement 17 die Wärmeabgabe von demselben an die strömende Flüssigkeit von der Fließgeschwindigkeit der Flüssigkeit (bzw. von dem Durchfluss) abhängt. Dementsprechend kann nach einer vorhergehenden Kalibrierung durch den thermischen Anemometriesensor 16 der Durchfluss einer, in einer Rohrleitung (bzw. hier: in dem Strömungspfad der Tankauslass-Anschlussvorrichtung) strömenden Flüssigkeit bestimmt werden. Durch Integration des seit Beginn der Entnahme gemessenen Durchflusses über der Zeit kann die entnommene Gesamtmenge der Flüssigkeit ermittelt werden. Während der Zeiten, zu denen keine Flüssigkeit entnommen wird, kann der thermische Anemometriesensor 16 zur Temperaturmessung der Flüssigkeit eingesetzt werden. Beide Varianten zum Einsatz des thermischen Anemometriesensors 16 werden nachfolgend im Detail erläutert, wobei zunächst die Durchflussmessung beschrieben wird.

In Bezug auf die Durchflussmessung kann die von dem Widerstandsheizelement 17 auf die Flüssigkeit übertragene Wärmeleistung $\dot{Q}$ (dQ/dt) durch die nachfolgende Gleichung (1) beschrieben werden.

$$(1) \qquad \dot{Q} = \frac{1}{R_{th}}(T_{Wi} - T_{Fl})$$

In der Gleichung (1) wird mit $R_{th}$ der Wärmewiderstand (Einheit K/W; K: Kelvin; W: Watt) bezüglich der Wärmeleitung von dem Widerstandsheizelement 17 auf die Flüssigkeit bezeichnet. Dieser Wärmewiderstand $R_{th}$ ist abhängig von dem Durchfluss der strömenden Flüssigkeit sowie zusätzlich von den spezifischen Materialeigenschaften des Widerstandsheizelements 17 und der Flüssigkeit, wobei diese als konstant angesetzt werden können. $T_{Wi}$ ist die Temperatur des beheizten Widerstandsheizelements 17 und $T_{Fl}$ ist die Temperatur der umgebenden Flüssigkeit. Der Durchfluss (Flüssigkeitsvolumen pro Zeiteinheit: dV/dt) ist folglich als Funktion des Wärmewiderstands $R_{th}$ darstellbar, wie aus der nachfolgenden Gleichung (2) hervorgeht. Diese funktionelle Abhängigkeit kann insbesondere durch eine Kalibrierung ermittelt werden. Sie kann in Form einer Look-up-Tabelle (Tabelle, in der für verschiedene $R_{th}$-Werte entsprechende Durchflusswerte hinterlegt sind) in der Sensorelektronik 26 oder gegebenenfalls auch in einer übergeordneten Geräteelektronik bereitgestellt werden.

$$(2) \qquad dV/dt = f(R_{th})$$

Wird die Gleichung (1) nach $R_{th}$ aufgelöst, so wird nachfolgende Gleichung (3) erhalten:

$$(3) \qquad R_{th} = \frac{(T_{Wi} - T_{Fl})}{\dot{Q}}$$

Dabei lässt sich in Gleichung (3) die übertragene Wärmeleistung $\dot{Q}$ (dQ/dt) durch das Produkt aus der, an dem Widerstandsheizelement 17 abfallenden Spannung $U_{Wi}$ und dem, durch das Widerstandsheizelement 17 fließenden Strom $I_{Wi}$ berechnen, wie in der nachfolgenden Gleichung (4) dargestellt ist.

$$(4) \qquad \dot{Q} = U_{Wi} I_{Wi}$$

Weist das eingesetzte Widerstandsheizelement 17 einen temperaturabhängigen, elektrischen Widerstand $R_{Wi}$ auf, so kann aus dem Wert des elektrischen Widerstands $R_{Wi}$ jeweils die aktuelle Temperatur $T_{Wi}$ des Widerstandsheizelements 17 ermittelt werden und in Gleichung (3) eingesetzt werden. Die Ermittlung des elektrischen Widerstands $R_{Wi}$ des Widerstandsheizelements 17 kann dabei insbesondere aus der, an dem Widerstandsheizelement 17 abfallenden Spannung $U_{Wi}$ und aus dem, durch das Widerstandsheizelement 17 fließenden Strom $I_{Wi}$ ermittelt werden, wie in der nachfolgenden Gleichung (5) dargestellt ist.

$$(5) \qquad R_{Wi} = \frac{U_{Wi}}{I_{Wi}}$$

Die Temperaturabhängigkeit des elektrischen Widerstands $R_{Wi}$ des Widerstandsheizelements 17 kann experimentell ermittelt (und beispielsweise in Form einer Look-up-Tabelle gespeichert werden) oder durch eine geeignete Gleichung ausgedrückt werden. Letzterer Fall wird nachfolgend beispielhaft anhand eines Widerstandsheizelements 17 erläutert, welches durch ein PTC-Widerstandsheizelement auf Basis von Bariumtitanat gebildet wird. Dieses weist im Arbeitsbereich eine exponentielle Kennlinie auf, wie in der nachfolgenden Gleichung (6) dargestellt ist.

$$(6) \qquad R_{Wi} = R_N e^{b(T_{Wi} - T_N)}$$

Dabei werden in Gleichung (6) mit $T_N$ die Nenntemperatur des Widerstandsheizelements 17 (die konstant ist), mit $R_N$ der Nennwiderstand des Widerstandsheizelements 17 bei der Nenntemperatur $T_N$ und mit b eine für das Widerstandsheizelement 17 charakteristische Materialkonstante bezeichnet. Wird die in Gleichung (5) angegebene Beziehung in Gleichung (6) eingesetzt und wird die Gleichung (6) ferner nach $T_{Wi}$ aufgelöst, so wird die nachfolgende Gleichung (7) erhalten.

$$(7) \qquad T_{Wi} = T_N + b^{-1} \ln(\frac{U_{Wi}}{I_{Wi} R_N})$$

Werden die in den Gleichungen (4) und (7) angegebenen Beziehungen in Gleichung (3) eingesetzt, so ergibt sich für den Wärmewiderstand $R_{th}$ die in der nachfolgenden Gleichung (8) angegebene Beziehung:

$$(8) \qquad R_{th} = \frac{T_N - T_{Fl} + b^{-1} \ln(\frac{U_{Wi}}{I_{Wi} R_N})}{U_{Wi} I_{Wi}}$$

Dementsprechend kann der Wärmewiderstand $R_{th}$ aus den nachfolgenden, im Einsatz zu ermittelnden Größen ermittelt werden:

- der an dem Widerstandsheizelement 17 abfallenden Spannung $U_{Wi}$,
- dem durch das Widerstandsheizelement 17 fließenden Strom $I_{Wi}$, sowie
- der Temperatur der strömenden Flüssigkeit $T_{Fl}$.

Die weiteren Größen in Gleichung (8) bilden konstante Parameter, die im Voraus ermittelbar sind. Als Temperatur der strömenden Flüssigkeit $T_{Fl}$ wird vorzugsweise die Temperatur eingesetzt, die mittels eines, in die Tankauslass-Anschlussvorrichtung integrierten Temperatursensors gemessen wird. Dabei kann dieser Temperatursensor durch den in Fig. 1 dargestellten thermischen Anemometriesensor 16 gebildet werden und die Temperaturerfassung während der Zeiten, zu denen keine Flüssigkeit aus dem Flüssigkeitstank entnommen wird erfolgen, wie dies bereits oberhalb erläutert wurde. Ferner ist bevorzugt, dass der thermische Anemometriesensor 16 derart betrieben wird, dass zur Durchführung der Durchflussmessung dessen Widerstandsheizelement 17 jeweils von einem konstanten Strom durchflossen wird, d.h. dass $I_{Wi}$ jeweils auf einen konstanten Wert eingestellt wird.

Eine Schaltungsanordnung 34 für einen thermischen Anemometriesensor 16, durch den sowohl eine Durchflussmessung als auch eine Temperaturmessung durchführbar ist, wird nachfolgend unter Bezugnahme auf Fig. 2 erläutert. Dabei werden - soweit Übereinstimmung besteht - die gleichen Bezugszeichen wie in Fig. 1 verwendet. Die Schaltungsanordnung 34 weist zwei Versorgungsanschlüsse 36, 38 (zum Anschluss an eine entsprechende Verkabelung) auf, wobei an den einen Versorgungsanschluss 36 eine Versorgungsspannung Uv und an den anderen Versorgungsanschluss 38 Masse anzulegen sind. Die Schaltungsanordnung 34 weist einen weiteren Steuer-Anschluss 40, an dem (z.B. von der Sensorelektronik 26) eine Steuerspannung $U_S$ anlegbar ist, auf. Der Steuer-Anschluss 40 ist über einen ersten Widerstand R1 an der Basis eines ersten Transistors T1 angeschlossen. Der Kollektor des ersten Transistors T1 ist über zwei, in Serie geschaltete Widerstände R2 und R3 mit dem, für die Versorgungsspannung vorgesehenen Versorgungsanschluss 36 verbunden, während der Emitter des ersten Transistors T1 mit der Masse verbunden ist. Zwischen den beiden, in Serie geschalteten Widerständen R2 und R3 ist die Basis eines zweiten Transistors T2 angeschlossen. Der Kollektor des zweiten Transistors T2 ist - parallel zu dem ersten Transistor T1 - mit dem, für die Versorgungsspannung vorgesehenen Versorgungsanschluss 36 verbunden, während dessen Emitter über das Widerstandsheizelement 17 mit Masse verbunden ist. Das Widerstandsheizelement 17 wird durch ein PTC-Widerstandsheizelement gebildet, das bei dem, in Frage kommenden Temperaturbereich beispielsweise einen elektrischen Widerstand im Bereich von 100 - 300 Ω aufweisen kann. Parallel zu dem zweiten Transistor T2 und in Serie zu dem Widerstandsheizelement 17 ist ein Vorwiderstand RV für das Widerstandsheizelement 17, der zum Durchführen der Temperaturmessung benötigt wird, vorgesehen. Die über dem Widerstandsheizelement 17 abfallende Spannung Uwi kann über den Anschluss 42 (gegenüber Masse) erfasst werden.

Nachfolgend wird zunächst die Durchführung einer Durchflussmessung erläutert. Hierzu wird an den Steuer-Anschluss 40 eine Steuerspannung Us (von beispielsweise 5 Volt) angelegt, wie in Fig. 2 schematisch dargestellt ist. Durch Anlegen der Steuerspannung Us wird der erste Transistor T1 aufgesteuert (d.h. dass ein Stromfluss von dessen Kollektor zu dessen Emitter ermöglicht wird), wodurch wiederum der zweite Transistor T2 aufgesteuert wird (d.h. dass ein Stromfluss von dessen Kollektor zu dessen Emitter ermöglicht wird). Die durch den ersten T1 und zweiten Transistor T2 sowie durch den ersten bis dritten Widerstand R1-R3 gebildete Schaltung bildet bei Anlegen einer Versorgungsspannung an den Versorgungsanschluss 36 eine Konstantstromquelle. Dementsprechend wird - unabhängig von dem, mit dem Durchfluss variierenden Widerstand $R_{Wi}$ des Widerstandsheizelements 17 - ein konstanter, durch das Widerstandsheizelement 17 strömender Strom $I_{Wi}$ (von beispielsweise 50 mA) eingestellt, wobei die (geringe) Beeinflussung durch den parallel dazu geschalteten Vorwiderstand RV zusätzlich berücksichtigt werden kann. Die aktuelle, über dem Widerstandsheizelement 17 abfallende Spannung $U_{Wi}$ wird über den Anschluss 42 (gegenüber Masse) gemessen. Dementsprechend kann aus diesen Größen der Durchfluss ermittelt werden, wie oberhalb erläutert wurde. Aus dem gemessenen Durchfluss wiederum kann durch Integration über die Zeit die, während einer Getränkezubereitung entnommene Flüssigkeitsmenge ermittelt werden.

Zur Durchführung der Temperaturmessung wird keine Steuerspannung an dem Steuer-Anschluss 40 angelegt, was dazu führt, dass sowohl der erste T1 als auch der zweite T2 Transistor gesperrt sind. Der Stromfluss erfolgt ausschließlich über den Vorwiderstand RV, wodurch der Stromfluss begrenzt wird. Der Vorwiderstand wird dabei derart gewählt, dass ein merkliches Beheizen der Flüssigkeit durch das Widerstandsheizelement 17 vermieden wird, umgekehrt aber noch ein ausreichendes Spannungssignal über dem Widerstandsheizelement 17 gemessen werden kann. Aus der gemessenen, über dem Widerstandsheizelement 17 abfallenden Spannung kann (in bekannter Weise) die Temperatur der Flüssigkeit bestimmt werden.

Das Problem, dass sich die Temperatur der, in dem Flüssigkeitstank befindlichen Flüssigkeit nach Durchführung der Temperaturmessung und vor einer Getränkezubereitung durch eine Zugabe von Flüssigkeit in den Tank durch einen Nutzer ändert, kann dadurch vermieden werden, dass der Flüssigkeitstank einen Tankdeckel aufweist, der im eingebauten Zustand des Flüssigkeitstanks nicht geöffnet werden kann. Ferner kann die Geräteelektronik und/oder die Sensorelektronik derart ausgebildet sein, dass nach jedem Aus- und Einbau des Flüssigkeitstanks zunächst eine Temperaturmessung durchgeführt wird.

Weiterhin ist zu erwähnen, dass durch Auswerten der Sprungantworten des thermischen Anemometriesensors 16 auf den Verkalkungsgrad der Getränkezubereitungsvorrichtung geschlossen werden kann.

Alternativ zu dem in Fig. 1 dargestellten Aufbau und alternativ zu der in Fig. 2 dargestellten Schaltungsanordnung sind auch noch weitere Varianten zur Realisierung der vorliegenden Erfindung möglich. Insbesondere kann auch vorgesehen sein, dass die Sensoranordnung 14 auch noch weitere oder alternative Sensoren aufweist. Beispielsweise kann der Durchflusssensor auch durch einen Flügelradzähler gebildet werden, der insbesondere ein, mit einem Magneten bestücktes Flügelrad und ein räumlich nah dazu angeordnetes Hallelement zur Auswertung aufweisen kann.

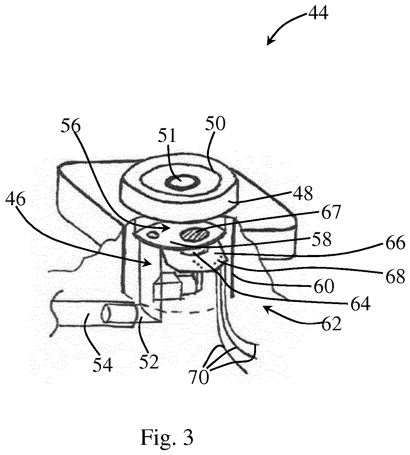

Nachfolgend wird unter Bezugnahme auf Fig. 3 eine zweite Ausführungsform einer Tankauslass-Anschlussvorrichtung 44 erläutert. Dabei wird vorwiegend auf die Unterschiede gegenüber der ersten Ausführungsform eingegangen.

Die Tankauslass-Anschlussvorrichtung 44 weist wiederum einen, durch diese hindurchführenden Strömungspfad 46 auf, wobei ein stirnseitiges Endstück 48, das einen eingesetzten Dichtungsring 50 aufweist, zum Anschluss an ein (nicht dargestelltes) Auslassbauteil eines Flüssigkeitstanks dient. Zentral in dem stirnseitigen Endstück 48 ist wiederum ein Vorsprung 51 vorgesehen, der zum Öffnen des Ventils eines zugehörigen (nicht dargestellten) Auslassbauteils dient. Ein rückseitiges Endstück 52, das vorliegend abgewinkelt ausgebildet ist, ist an einer Flüssigkeitsleitung 54 (Entnahmeleitung) angeschlossen. Die, in die Tankauslass-Anschlussvorrichtung 44 einströmende Flüssigkeit strömt zunächst in eine Filterkammer 56, die durch eine Trennwand 58 von dem stromabwärtigen Abschnitt der Tankauslass-Anschlussvorrichtung 44 unterteilt ist. Angrenzend an die Trennwand 58 und innerhalb eines Gehäuses 60 der Tankauslass-Anschlussvorrichtung 44 ist eine Sensoranordnung 62 vorgesehen, die vorliegend einen, als Drucksensor 64 ausgebildeten Füllstandssensor, einen, als thermischen Anemometriesensor ausgebildeten Durchflusssensor und Temperatursensor sowie eine Sensorelektronik 66, die durch eine Platine gebildet wird, aufweist. Eine Membran 67 des Drucksensors 64 ist dabei integral in der Trennwand 58 der Filterkammer 56 ausgebildet. Die Sensoren der Sensoranordnung 62 sind in Fig. 3 nicht im Detail dargestellt. Die Sensorelektronik 66 weist drei Anschlüsse 68 auf, wobei hiervon zwei Anschlüsse zur elektrischen Stromversorgung und ein Anschluss zur Kommunikation dienen. An den Anschlüssen 68 sind entsprechende Kabel 70 angeschlossen.

**Patentansprüche**

1.  Tankauslass-Anschlussvorrichtung zum Anschluss an einen Tankauslass eines Flüssigkeitstanks einer Getränkezubereitungsvorrichtung, aufweisend einen, durch die Tankauslass-Anschlussvorrichtung (2; 44) hindurchführenden Strömungspfad (4; 46), wobei

    eine, in die Tankauslass-Anschlussvorrichtung (2; 44) integrierte Sensoranordnung (14; 62), die zumindest einen Füllstandssensor (18; 64), einen Durchflusssensor (16) und einen Temperatursensor (16) aufweist, derart ausgebildet ist, dass durch den Füllstandssensor (18; 64) ein Füllstand innerhalb eines, an der Tankauslass-Anschlussvorrichtung (2; 44) angeschlossenen Flüssigkeitstanks, durch den Durchflusssensor (16) ein Durchfluss von Flüssigkeit durch die Tankauslass-Anschlussvorrichtung (2; 44) und durch den Temperatursensor (16) die Temperatur einer, in dem Strömungspfad (4; 46) und/oder in einem, an der Tankauslass-Anschlussvorrichtung (2; 44) angeschlossenen Flüssigkeitstank befindlichen Flüssigkeit messbar ist und dass sämtliche, in die Tankauslass-Anschlussvorrichtung (2; 44) integrierte Sensoren (16, 18, 20, 22; 64) der Sensoranordnung (14; 62) eine gemeinsame Sensorelektronik (26; 66) und gemeinsame Versorgungs- und Kommunikationsanschlüsse (68) aufweisen.

2.  Tankauslass-Anschlussvorrichtung gemäß Anspruch 1, **dadurch gekennzeichnet, dass** die Sensoranordnung (14; 62) einen Tankerkennungssensor (20, 22) aufweist, durch den erkennbar ist, ob die Tankauslass-Anschlussvorrichtung (2; 44) an einem Flüssigkeitstank angeschlossen ist.

3.  Tankauslass-Anschlussvorrichtung gemäß einem der vorangehenden Ansprüche, **dadurch gekennzeichnet, dass** der Durchflusssensor (16) durch einen thermischen Anemometriesensor (16) gebildet wird.

4. Tankauslass-Anschlussvorrichtung gemäß Anspruch 3, **dadurch gekennzeichnet, dass** der thermische Anemometriesensor (16) ein NTC-Widerstandsheizelement oder ein PTC-Widerstandsheizelement (17) aufweist.

5. Tankauslass-Anschlussvorrichtung gemäß Anspruch 3 oder 4, **dadurch gekennzeichnet, dass** der thermische Anemometriesensor (16) zur Durchführung einer Durchflussmessung derart betreibbar ist, dass ein konstanter Stromfluss über dessen Widerstandsheizelement (17) eingestellt wird.

6. Tankauslass-Anschlussvorrichtung gemäß einem der Ansprüche 3 bis 5, **dadurch gekennzeichnet, dass** der thermische Anemometriesensor (16) derart betreibbar ist, dass durch diesen eine Temperaturmessung einer, in dem Strömungspfad (4; 46) befindlichen Flüssigkeit durchführbar ist.

7. Tankauslass-Anschlussvorrichtung gemäß einem der vorangehenden Ansprüche, **dadurch gekennzeichnet, dass** der Füllstandssensor durch einen Drucksensor (18; 64) gebildet wird.

8. Getränkezubereitungsvorrichtung mit mindestens einer Tankauslass-Anschlussvorrichtung (2; 44) gemäß einem der vorangehenden Ansprüche zum Anschluss eines Flüssigkeitstanks an derselben.

9. Getränkezubereitungsvorrichtung gemäß Anspruch 8, **dadurch gekennzeichnet, dass** diese eine, mit der Sensoranordnung (14; 62) in Kommunikationsverbindung stehende Geräteelektronik aufweist.

10. Getränkezubereitungsvorrichtung gemäß Anspruch 9, **dadurch gekennzeichnet, dass** die Geräteelektronik derart ausgebildet ist, dass durch diese die Sensoranordnung (14; 62) in Abhängigkeit von dem jeweiligen Betriebszustand ansteuerbar ist.

11. Getränkezubereitungsvorrichtung gemäß Anspruch 9 oder 10, **dadurch gekennzeichnet dass** die Geräteelektronik derart ausgebildet ist, dass durch diese die Sensoranordnung (14; 62) nur zu Zeiten, in denen keine Flüssigkeitsentnahme aus dem Flüssigkeitstank erfolgt, zur Durchführung einer Füllstandsmessung und/oder einer Temperaturmessung ansteuerbar ist.

12. Getränkezubereitungsvorrichtung gemäß einem der Ansprüche 9 bis 11, **dadurch gekennzeichnet, dass** die Geräteelektronik derart ausgebildet ist, dass durch diese die Sensoranordnung (14; 62) zu den Zeiten, in denen eine Flüssigkeitsentnahme aus dem Flüssigkeitstank erfolgt, zur Durchführung einer Durchflussmessung ansteuerbar ist.

13. Getränkezubereitungsvorrichtung gemäß Anspruch 12, **dadurch gekennzeichnet, dass** der Durchflusssensor durch einen thermischen Anemometriesensor (16) gebildet wird und dass die Geräteelektronik und die Sensoranordnung (14; 62) derart ausgebildet sind, dass der Fall, in dem ein Widerstandsheizelement (17) des thermischen Anemometriesensors (16) über einen vorbestimmten Grenzwert erwärmt wird, als Fehlen des Flüssigkeitstanks detektierbar ist.

**Claims**

1. Tank outlet connection apparatus for connecting to a tank outlet of a liquid tank of a beverage preparation apparatus, having a flow path (4; 46) passing through the tank outlet connection apparatus (2; 44), wherein a sensor arrangement (14; 62) integrated into the tank outlet connection apparatus (2; 44), which has at least one fill level sensor (18; 64), a flow rate sensor (16) and a temperature sensor (16), is embodied such that it is possible for the fill level sensor (18; 64) to measure a fill level within a liquid tank connected to the tank outlet connection apparatus (2; 44), for the flow rate sensor (16) to measure a flow rate of liquid through the tank outlet connection apparatus (2; 44) and for the temperature sensor (16) to measure the temperature of a liquid situated in the flow path (4; 46) and/or in a liquid tank connected to the tank outlet connection apparatus (2; 44) and that all sensors (16; 18; 20; 22; 64) of the sensor arrangement (14; 62) which are integrated into the tank outlet connection apparatus (2; 44) have a shared sensor electronics unit (26; 66) and shared supply and communication ports (68).

2. Tank outlet connection apparatus according to claim 1, **characterised in that** the sensor arrangement (14; 62) has a tank identification sensor (20; 22), by way of which it is possible to identify whether the tank outlet connection apparatus (2; 44) is connected to a liquid tank.

3. Tank outlet connection apparatus according to one of the preceding claims, **characterised in that** the flow rate sensor (16) is formed by a thermal anemometry sensor (16).

4. Tank outlet connection apparatus according to claim 3, **characterised in that** the thermal anemometry sensor (16) has an NTC resistance heating element or a PTC resistance heating element (17).

5. Tank outlet connection apparatus according to claim 3 or 4, **characterised in that** the thermal anemometry sensor (16), for the purpose of carrying out a flow rate measurement, is able to be operated such that a constant current flow is set over its resistance heating element (17).

6. Tank outlet connection apparatus according to one of claims 3 to 5, **characterised in that** the thermal anemometry sensor (16) is able to be operated such that it is able to carry out a temperature measurement of a liquid situated in the flow path (4; 46).

7. Tank outlet connection apparatus according to one of the preceding claims, **characterised in that** the fill level sensor is formed by a pressure sensor (18; 64).

8. Beverage preparation apparatus with at least one tank outlet connection apparatus (2; 44) according to one of the preceding claims, for the connection of a liquid tank to the same.

9. Beverage preparation apparatus according to claim 8, **characterised in that** it has an appliance electronics unit communicatively connected to the sensor arrangement (14; 62).

10. Beverage preparation apparatus according to claim 9, **characterised in that** the appliance electronics unit is embodied such that it is able to actuate the sensor arrangement (14; 62) as a function of the respective operating state

11. Beverage preparation apparatus according to claim 9 or 10, **characterised in that** the appliance electronics unit is embodied such that it is only able to actuate the sensor arrangement (14; 62) to carry out a fill level measurement and/or a temperature measurement at times in which no liquid is being extracted from the liquid tank.

12. Beverage preparation apparatus according to one of claims 9 to 11, **characterised in that** the appliance electronics unit is embodied such that it is able to actuate the sensor arrangement (14; 62) to carry out a flow rate measurement at times in which liquid is being extracted from the liquid tank.

13. Beverage preparation apparatus according to claim 12, **characterised in that** the flow rate sensor is formed by a thermal anemometry sensor (16) and that the appliance electronics unit and the sensor arrangement (14; 62) are embodied such that the case in which a resistance heating element (17) of the thermal anemometry sensor (16) is heated over a predetermined threshold value is able to be detected as a fault in the liquid tank.

**Revendications**

1. Dispositif de raccordement de sortie de réservoir pour le raccordement à une sortie de réservoir d'un réservoir de fluide d'un dispositif de préparation de boissons, présentant un sentier d'écoulement (4 ; 46) traversant le dispositif de raccordement de sortie de réservoir (2 ; 44), dans lequel un agencement de capteurs (14 ; 62) intégré au dispositif de raccordement de sortie de réservoir (2 ; 44), qui présente au moins un capteur de niveau de remplissage (18 ; 64), un capteur de débit (16) et un capteur de température (16), est exécuté de telle sorte que le capteur de niveau de remplissage (18 ; 64) permet de mesurer un niveau de remplissage à l'intérieur d'un réservoir de fluide raccord au dispositif de raccordement de sortie de réservoir (2 ; 44), le capteur de débit (16) permet de mesurer un débit de fluide à travers le dispositif de raccordement de sortie de réservoir (2 ; 44) et le capteur de température (16) permet de mesurer la température d'un fluide se trouvant dans le sentier d'écoulement (4 ; 46) et/ou dans un réservoir de fluide raccordé au dispositif de raccordement de sortie de réservoir (2 ; 44) et en ce que l'ensemble des capteurs (16, 18, 20, 22 ; 64) de l'agencement de capteurs (14 ; 62) intégrés au dispositif de raccordement de sortie de réservoir (2 ; 44) présentent une électronique de capteurs (26 ; 66) commune et des raccordements d'alimentation et de communication (68) communs.

2. Dispositif de raccordement de sortie de réservoir selon la revendication 1, **caractérisé en ce que** l'agencement de capteurs (14 ; 62) présente un capteur de détection de réservoir (20, 22) permettant de détecter si le dispositif de raccordement de sortie de réservoir (2 ; 44) est raccordé à un réservoir de fluide.

3. Dispositif de raccordement de sortie de réservoir selon l'une des revendications précédentes, **caractérisé en ce que** le capteur de débit (16) est constitué par un capteur anémométrique thermique (16).

4. Dispositif de raccordement de sortie de réservoir selon la revendication 3, **caractérisé en ce que** le capteur anémométrique thermique (16) présente un élément chauffant à résistance CTN ou un élément chauffant à résistance CTP (17).

5. Dispositif de raccordement de sortie de réservoir selon la revendication 3 ou 4, **caractérisé en ce que** le capteur anémométrique thermique (16) peut être exploité pour la réalisation d'une mesure de débit de telle sorte qu'une conduction de courant constante est établie à travers son élément chauffant à résistance (17).

**6.** Dispositif de raccordement de sortie de réservoir selon l'une des revendications 3 à 5, **caractérisé en ce que** le capteur anémométrique thermique (16) peut être exploité de telle sorte qu'il puisse effectuer une mesure de température d'un fluide se trouvant dans le sentier d'écoulement (4 ; 46).

**7.** Dispositif de raccordement de sortie de réservoir selon l'une des revendications précédentes, **caractérisé en ce que** le capteur de niveau de remplissage est constitué par un capteur de pression (18 ; 64).

**8.** Dispositif de préparation de boissons avec au moins un dispositif de raccordement de sortie de réservoir (2 ; 44) selon l'une des revendications précédentes pour le raccordement d'un réservoir de fluide à celui-ci.

**9.** Dispositif de préparation de boissons selon la revendication 8, **caractérisé en ce qu'**il présente une électronique d'appareil en connexion de communication avec l'agencement de capteurs (14 ; 62).

**10.** Dispositif de préparation de boissons selon la revendication 9, **caractérisé en ce que** l'électronique d'appareil est exécutée de telle sorte qu'elle permet de commander l'agencement de capteurs (14 ; 62) selon l'état de fonctionnement respectif.

**11.** Dispositif de préparation de boissons selon la revendication 9 ou 10, **caractérisé en ce que** l'électronique d'appareil est exécutée de telle sorte qu'elle permet de commander l'agencement de capteurs (14 ; 62) uniquement lorsqu'aucun prélèvement de fluide en dehors du réservoir de fluide ne s'effectue, pour la réalisation d'une mesure du niveau de remplissage et/ou d'une mesure de température.

**12.** Dispositif de préparation de boissons selon l'une des revendications 9 à 11, **caractérisé en ce que** l'électronique d'appareil est exécutée de telle sorte qu'elle permet de commander l'agencement de capteurs (14 ; 62) lors d'un prélèvement de fluide en dehors du réservoir de fluide s'effectue, pour la réalisation d'une mesure du débit.

**13.** Dispositif de préparation de boissons selon la revendication 12, **caractérisé en ce que** le capteur de débit est constitué par un capteur anémométrique thermique (16) et **en ce que** l'électronique d'appareil et l'agencement de capteurs (14 ; 62) sont exécutés de telle sorte que le cas dans lequel un élément chauffant à résistance (17) du capteur anémométrique thermique (16) est chauffé au-delà d'une valeur limite préalablement déterminée peut être détecté comme une absence du réservoir de fluide.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 006131769 A
- WO 0227276 A2
- US 2010005903 A1